(19) Europäisches Patentamt
European Patent Office
Office européen des brevets

(11) **EP 4 718 108 A1**

(12) **EUROPÄISCHE PATENTANMELDUNG**

(43) Veröffentlichungstag:
**01.04.2026 Patentblatt 2026/14**

(21) Anmeldenummer: **25203904.5**

(22) Anmeldetag: **23.09.2025**

(51) Internationale Patentklassifikation (IPC):
**G01S 7/02** *(2006.01)* **G01S 7/41** *(2006.01)*
**G01S 13/00** *(2006.01)* **G01S 13/88** *(2006.01)*

(52) Gemeinsame Patentklassifikation (CPC):
**G01S 7/024; G01S 7/412; G01S 7/417;
G01S 13/003; G01S 13/886**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **27.09.2024 DE 102024128108**

(71) Anmelder: **Fraunhofer-Gesellschaft zur
Förderung
der angewandten Forschung e.V.
80686 München (DE)**

(72) Erfinder:
• **SEIDEL, Viktor
53343 Wachtberg (DE)**
• **UMMENHOFER, Martin
53343 Wachtberg (DE)**

(74) Vertreter: **2SPL Patentanwälte PartG mbB
Landaubogen 3
81373 München (DE)**

(54) **EIN VERFAHREN ZUR ÜBERWACHUNG VON OFFSHORE ANLAGEN MIT EINEM PASSIV RADAR, PASSIVES RADAR UND COMPUTERPROGRAMM**

(57) Vorgeschlagen wird ein Verfahren zur Überwachung einer Offshore Anlage (102) mit einem Passiv Radar (100). Das Verfahren umfasst ein Beleuchten eines Gebietes um die Offshore Anlage (102) mit zumindest einem ersten polarisierten Signal (108a) und einem zweiten polarisierten Signal (108b) mittels eines Transmitters auf einer beweglichen Plattform (110). Das Verfahren umfasst ferner ein Empfangen des ersten polarisierten Signals (108a) und des zweiten polarisierten Signals (108b) und ein Empfangen eines ersten reflektierten Signals (112a) und eines zweiten reflektierten Signals (112b), wobei das erste reflektierte Signal (112a) eine Reflektion des ersten polarisierten Signals (108a) an einem Objekt (114) und das zweite reflektierte Signal (112b) eine Reflektion des zweiten polarisierten Signals (108b) an dem Objekt (114) ist. Das Objekte (114) wird basierend auf dem ersten polarisierten Signal (108a), dem zweiten polarisierten Signal (108b), dem ersten reflektierten Signal (112a) und dem zweiten reflektierten Signal (112b) klassifiziert. Eine Trajektorie des Objektes (114) wird bestimmt. Es erfolgt ein Ausgeben eines Alarmsignals (120), wenn die Trajektorie eine definierte Bedingung erfüllt und wenn das Objekt (114) zu einer definierten Klasse gehört.

**FIG. 2**

| |
|---|
| Beleuchten mit einem ersten polarisierten Signal und einem zweiten polarisierten Signal — 210 |
| Empfangen des ersten polarisierten Signals und des zweiten polarisierten Signals — 220 |
| Empfangen eines ersten reflektierten Signals und eines zweiten reflektierten Signals — 230 |
| Klassifizieren eines Objektes — 240 |
| Bestimmen einer Trajektorie des Objektes — 250 |
| Ausgeben eines Alarmsignals — 260 |

EP 4 718 108 A1

## Beschreibung

### Technisches Gebiet

Die vorliegende Offenbarung betrifft ein Verfahren zur Überwachung von Offshore Anlagen mit einem Passiv Radar, das den örtlichen Gegebenheiten Rechnung trägt.

### Hintergrund

Für den Betrieb von Offshore-Windenergieanlagen (OWEA) ist oft eine bedarfsgerechte Befeuerung erwünscht, also eine Bedarfsgerechte Aktivierung einer Beleuchtung der Offshore Anlage. Damit soll die nächtliche Beleuchtung der Anlagen im Offshore-Windpark (OWP) auf ein Minimum reduziert werden. Ein Ziel hierbei ist der Schutz von Zugvögeln. Des Weiteren sollen damit auch die Lichtemissionen auf das Notwendige reduziert werden. Solch eine bedarfsgesteuerte Nachtkennzeichnung (BNK) kann unter anderem unter Verwendung von Radaren realisiert werden. Die Einsatzumgebung in Offshore-Anwendungen stellt dabei jedoch besondere Herausforderung beim Betrieb von Radaren dar. Die Drehbewegung von Rotoren von Windenergieanlagen können von Radaren als Falschziele aufgefasst werden. Wellengang und Niederschlag können ebenfalls durch Radargeräte erfasst werden, wodurch die Entdeckungswahrscheinlichkeit für die interessierenden Ziele wir Flugzeuge oder Vögel vermindert wird. Um beispielsweise den Schutz von Zugvögeln gewährleisten zu können, müssen deren Echosignaturen von Störsignalen im Radarbild unterscheidbar gemacht werden.

Es besteht somit ein Bedarf, ein diesen Herausforderungen Rechnung tragendes Radarsystem bereit zu stellen.

### Zusammenfassung

Einige der hierin beschriebenen Aspekte betreffen ein Verfahren zur Überwachung von Offshore Anlagen mit einem Passiv Radar, umfassend Beleuchten eines Gebietes um die Offshore Anlagen mit zumindest einem ersten polarisierten Signal und einem zweiten polarisierten Signal mittels eines Transmitters auf einer beweglichen Plattform, Empfangen des ersten polarisierten Signals und des zweiten polarisierten Signals, Empfangen eines ersten reflektierten Signals und eines zweiten reflektierten Signals, wobei das erste reflektierte Signal eine Reflektion des ersten polarisierten Signals an einem Objekt und das zweite reflektierte Signal eine Reflektion des zweiten polarisierten Signals an dem Objekt ist, Klassifizieren des Objektes basierend auf dem ersten polarisierten Signal, dem zweiten polarisierten Signal, dem ersten reflektierten Signal und dem zweiten reflektierten Signal, Bestimmen einer Trajektorie des Objektes, und Ausgeben eines Alarmsignals, wenn die Trajektorie eine definierte Bedingung erfüllt und wenn das Objekt zu einer definierten Klasse gehört.

Durch den Einsatz von Signalen unterschiedlicher Polarisation (beispielsweise mit zwei rechtwinklig zueinanderstehenden Polarisationsebenen) kann ein Empfänger mehr Informationen über das reflektierte Signal gewinnen als bei Verwendung eines unpolarisierten Signals. Dies kann eine genauere Charakterisierung und Unterscheidung von Objekten, wie etwa zwischen Vögeln, Drohnen, Schiffen oder Flugzeugen, die sich in der Umgebung der Offshore-Anlagen befinden, ermöglichen. Die polarimetrische Signalverarbeitung erlaubt die Erfassung zusätzlicher Streuinformationen, was zu einer präziseren Objektklassifikation führen kann. In Offshore-Umgebungen können Wetterbedingungen wie Wellengang oder Niederschlag Störungen verursachen, die als Clutter im Radarbild erscheinen. Die Verwendung von zwei unterschiedlichen Polarisationsebenen kann dazu dienen, Störsignale zu minimieren oder zu unterdrücken, da die unterschiedlichen Polarisationssignale verschiedene Streuverhalten aufweisen. Dies verbessert die Fähigkeit des Radars, zwischen nützlichen Echos und Störungen zu unterscheiden. Polarimetrische Verfahren können dadurch die Messung von zusätzlichen Zielparametern ermöglichen, wie der Objektsymmetrie, den Streuwinkeln und der Anzahl der Reflektionen. Diese Informationen liefern Hinweise auf die physikalischen Eigenschaften des Objekts, was mit unpolarisierten Signalen nicht möglich wäre. Dadurch kann beispielsweise auch das Radar-Echo von Rotoren von Windenergieanlagen erkannt werden, was in Offshore-Anwendungen häufig für Störungen sorgt.

Gemäß einigen der hierin beschriebenen Aspekte umfasst das Klassifizieren des Objektes ein Korrelieren des ersten polarisierten Signals und des ersten reflektierten Signals, ein Korrelieren des ersten polarisierten Signals und des zweiten reflektierten Signals, ein Korrelieren des zweiten polarisierten Signals und des ersten reflektierten Signals, sowie ein Korrelieren des zweiten polarisierten Signals und des zweiten reflektierten Signals. Durch die vier möglichen Korrelationen kann ein umfassenderes Bild des Objekts erzeugt werden, das zusätzliche Informationen über seine physikalischen Eigenschaften liefert. Dies umfasst Streuungseigenschaften, Symmetrien und Oberflächenbeschaffenheit. Solche Details können für bestimmte Anwendungen wichtig sein, beispielsweise bei der Unterscheidung von Vögeln und Drohnen, die ähnliche Größen, aber unterschiedliche Streuverhalten aufweisen können.

Gemäß einigen der hierin beschriebenen Aspekte umfasst die bewegliche Plattform ein Flugzeug, einen Ballon oder einen Satelliten. Flugzeuge und Satelliten können große Gebiete abdecken, die terrestrische Beleuchter (wie z. B. DVB-T-Sender) nicht erreichen können, insbesondere in abgelegenen Offshore-Umgebungen. Ballons können über längere Zeiträume in der Luft bleiben und stationär ein Gebiet überwachen, während Satelliten einen weiten Bereich abdecken können, indem sie sich auf stabilen Umlaufbahnen bewegen.

Flugzeuge bieten Flexibilität und Mobilität, um gezielt bestimmte Regionen zu beleuchten. Viele Satelliten und moderne fliegende Plattformen senden bereits dualpolarisierte Signale (orthogonal polarisiert), was ideal für polarimetrische Radaranwendungen ist.

Einige der hierin beschriebenen Aspekte umfassen ferner ein Aktivieren einer Beleuchtung der Offshore Anlage ansprechend auf das Alarmsignal, wodurch eine bedarfsgerechte Beleuchtung realisiert und eine Lichtverschmutzung der Umwelt vermieden werden kann.

Gemäß einigen der hierin beschriebenen Aspekte wird das Alarmsignal ausgegeben, wenn das Objekt als Fluggerät klassifiziert ist, um zu verhindern, dass es zu einer Kollision mit menschlichen Leidtragenden kommt.

Gemäß einigen der hierin beschriebenen Aspekte wird das Alarmsignal ausgegeben, wenn eine extrapolierte Trajektorie des Objektes in einen vorbestimmten Bereich um die Offshore Anlage eindringt. Dieses Kriterium kann zusätzlich dazu beitragen, dass eine Alarmaktion nur dann ausgeführt wird, wenn diese wirklich erforderlich ist. Beispielsweise kann so vermieden werden, dass die Alarmaktion ausgeführt wird, wenn das Objekt zwar in die Reichweite des Radarsystems kommt, die vorhergesagte Trajektorie jedoch zeigt, dass es in hinreichendem Abstand an der Offshore Anlage vorbeifliegen wird.

Einige der hierin beschriebenen Aspekte betreffen ein passives Radar zur Überwachung von Offshore Anlagen, umfassend eine erste Empfangsantenne, die ausgebildet ist, um ein erstes polarisiertes Signal und ein zweites polarisiertes Signal von einer beweglichen Plattform zu erhalten, eine zweite Empfangsantenne, die ausgebildet ist, um ein erstes reflektiertes Signal und ein zweites reflektiertes Signal zu empfangen, wobei das erste reflektierte Signal eine Reflektion des ersten polarisierten Signals an einem Objekt und das zweite reflektierte Signal eine Reflektion des zweiten polarisierten Signals an dem Objekt ist, und Eine Signalverarbeitungsschaltung, die ausgebildet ist, zum Klassifizieren des Objektes basierend auf dem ersten polarisierten Signal, dem zweiten polarisierten Signal, dem ersten reflektierten Signals und dem zweiten reflektierten Signal, Bestimmen einer Trajektorie des Objektes, und Ausgeben eines Alarmsignals, wenn die Trajektorie eine definierte Bedingung erfüllt und wenn das Objekt zu einer definierten Klasse gehört.

**Figurenkurzbeschreibung**

Einige Beispiele von Vorrichtungen und/oder Verfahren werden nachfolgend bezugnehmend auf die beiliegenden Figuren lediglich beispielhaft näher erläutert. Es zeigen:

Fig. 1 Eine Illustration eines Offshore Anlage und eines passiven Radarsystems;

Fig. 2 Ein Flussdiagramm eines Verfahrens zur Überwachung von Offshore Anlagen; und

Fig. 3 eine schematische Darstellung eines Verfahrens zum Auswerten von Radarsignalen.

**Beschreibung**

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

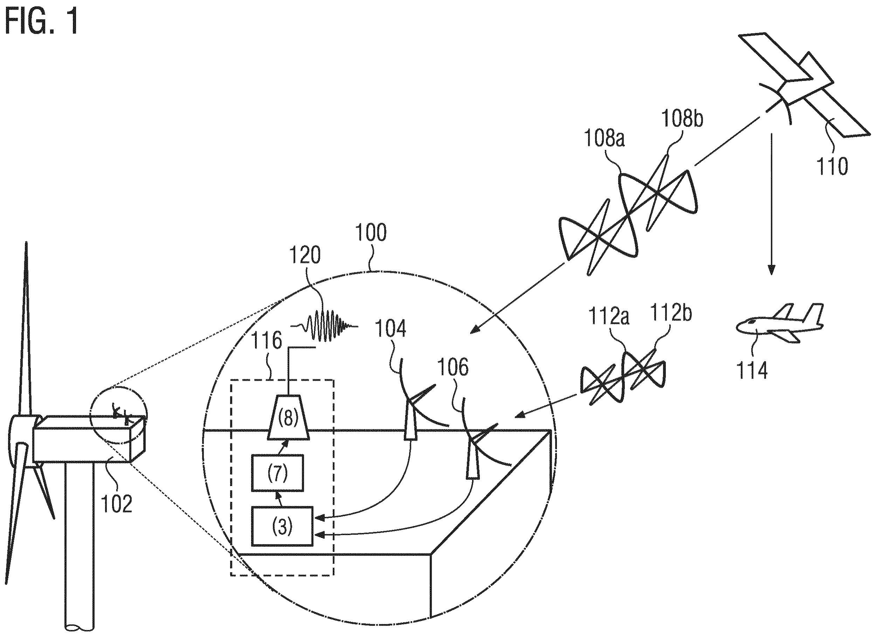

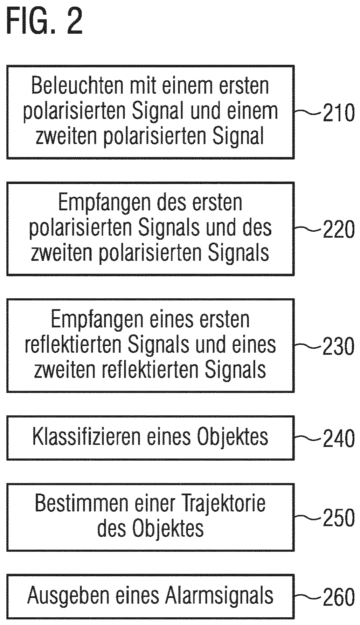

Nachfolgend wird anhand der Figuren 1 und 2 ein Beispiel für ein Verfahren zur Überwachung von Offshore Anlagenbeschrieben. Dabei zeigt Fig. 1 eine Prinzipskizze einer Offshore Anlage, eines passiven Radarsystems und eines Beispiels für einen Transmitter sowie Fig. 2 ein Flussdiagramm eines Verfahrens zur Überwachung von Offshore Anlagen.

Lediglich als Beispiel für eine Offshore Anlage zeigt Fig. 1 eine Windenergieanlage 102, die offshore installiert ist.

Eine erste Empfangsantenne 104 ist ausgebildet, um ein erstes polarisiertes Signal 108a und ein zweites polarisiertes Signal 108b von einer beweglichen Plattform 110 zu erhalten. Eine zweite Empfangsantenne 106, die ausgebildet ist, um ein erstes reflektiertes Signal 112a und ein zweites reflektiertes Signal 112b zu empfangen, wobei das erste reflektierte Signal 112a eine Reflektion des ersten polarisierten Signals 108a an einem Objekt 114 und das zweite reflektierte Signal 112b eine Reflektion des zweiten polarisierten Signals 108b an dem Objekt 114 ist. Wenngleich in Fig. 1 beispielhaft 2 vollständig getrennte Empfangsantennen dargestellt sind, ist dies lediglich ein Beispiel. Weitere Implementierungen von ersten Empfangsantennen und zweiten Empfangsantennen können auch in einer physischen Antenne zusammengefasst sein. Beispielsweise können die Signale auch von einem im Zeitmultiplex betriebenen Phased Array empfangen werden. Wesentlich ist lediglich, dass mittels der ersten Empfangsantenne und der zweiten Empfangsantenne die direkten polarisierten Signale vom Transmitter 110 und die reflektierten Signale vom Objekt 114 voneinander unterscheidbar empfangen werden können.

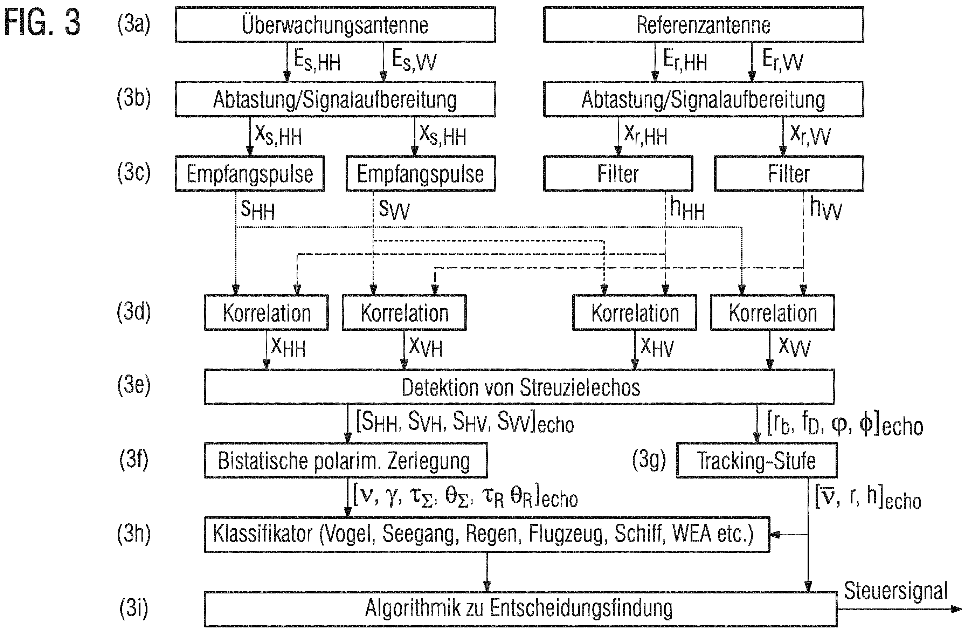

Antennen können dabei beispielsweise so konzipiert sein, dass sie durch Strahlformung (beamforming) sowohl eine Abtastung eines Areals als auch eine dauerhafte Nachverfolgung des fliegenden Beleuchters (z.B. Satelliten im niedrigen Erdorbit) ermöglichen. Zur polarimetrischen Signalerfassung sind diese ferner so ausgelegt, dass eine getrennte Messung von zwei beispielsweise orthogonalen Polarisationsebenen eines Radiofrequenzsignals möglich ist. Im Betrieb eines Ausführungsbeispiels, das Satelliten als Beleuchter verwendet, verfolgt eine für den Empfang des Referenzsignals designierte Antenne (die erste Antenne 104) erforderlichenfalls die Bahn des Satelliten als Fremdbeleuchter und erfasst dessen beispielsweise dual-linear polarisiertes Direktsignal. Dies befähigt das System ein Referenzsignal zur Radarsignalverarbeitung bereitzustellen. Eine zweite Antenne 106 sucht das Areal um die Anlage ab. Die Aufgabe dieser Überwachungsantenne besteht somit in der zeitgleichen Erfassung des an Objekten 114 gestreuten Echosignals. Zur Signalauswertung sind beide Antennen mit einer entsprechenden Auswerteeinheit verbunden, welche die Signale beispielsweise zeitsynchron und bei gleicher Mittenfrequenz und Bandbreite prozessiert, wie nachfolgend für eine konkrete Implementierung anhand von Fig. 3 gezeigt ist.

In Fig. 1 sind orthogonal linear polarisierte Signale dargestellt, wobei es sich ebenfalls nur um ein Beispiel handelt. In weiteren Implementierungen können beispielsweise auch entgegengesetzt zirkular polarisierte Signale verwendet werden.

Eine Signalverarbeitungsschaltung 116 ist ausgebildet, zum Klassifizieren des Objektes basierend auf dem ersten polarisierten Signal 108a, dem zweiten polarisierten Signal 108b, dem ersten reflektierten Signal 112a und dem zweiten reflektierten Signal 112b. Beim Klassifizieren des Objektes wird das Objekt einer bestimmten Objektklasse zugeordnet. Dies erfolgt durch die Analyse und Verarbeitung der Signale, die vom Objekt reflektiert werden. Die empfangenen Signale können beispielsweise mit einer Datenbank von bekannten Signaturen verglichen werden. Jedes Objekt, wie etwa ein Flugzeug, ein Vogel, eine Drohne oder ein Schiff, hat spezifische Eigenschaften, die sich in den reflektierten Signalen niederschlagen. Durch diesen Vergleich kann das System Rückschlüsse darauf ziehen, um welche Art von Objekt es sich handelt. Alternativ könnte auch ein trainiertes neuronales Netz verwendet werden, um auf das Objekt zu schließen. Das System analysiert bei der Klassifizierung optional ebenfalls die Trajektorie des Objekts, also die Richtung und Geschwindigkeit seiner Bewegung, um weitere Hinweise zu erhalten. Ein Flugzeug wird sich beispielsweise anders bewegen als ein Vogel oder ein Schiff.

Auch aus Gründen, die nicht direkt mit der Klassifizierung zu tun haben, wird Mittels der Signalverarbeitungsschaltung 116 ferner die Trajektorie des Objektes 114 bestimmt. Die Trajektorie des Objektes 114 dient dazu, um diese zu extrapolieren und die zukünftige Trajektorie des Objektes vorherzusagen. Insbesondere ist das Objekt 114 potenziell interessant, wenn dessen extrapolierte Trajektorie in einen definierten Bereich um die Offshore Anlage 102 eindringt. Allgemein gesprochen erzeugt die Signalverarbeitungsschaltung 116 ein Alarmsignal 120, wenn die Trajektorie eine definierte Bedingung erfüllt und wenn das Objekt 114 zu einer definierten Klasse gehört. Wird das Objekt 114 beispielsweise als Flugzeug klassifiziert und dringt die extrapolierte Trajektorie in den definierten Bereich ein, kann es erforderlich sein, ansprechend auf das Alarmsignal eine Aktion vorzunehmen, beispielsweise eine Befeuerung bzw. eine Beleuchtung der Offshore Anlage zu starten oder das Flugzeug anderweitig zu warnen.

Die von der Signalverarbeitungsschaltung 116 durchgeführten Schritte zur Überwachung von Offshore Anlagen 102 mit einem Passiv Radar 100 sind in Fig. 2 erneut in Form eines Flussdiagramms dargestellt. Das Verfahren umfasst das Beleuchten 210 eines Gebietes um die Offshore Anlagen mit zumindest einem ersten polarisierten Signal und einem zweiten polarisierten Signal mittels eines Transmitters auf einer beweglichen Plattform. Das Verfahren umfasst ferner das Empfangen 220 des ersten polarisierten Signals und des zweiten polarisierten Signals und das Empfangen 230 eines ersten reflektierten Signals und eines zweiten reflektierten Signals, wobei das erste reflektierte Signal eine Reflektion des ersten polarisierten Signals an einem Objekt und das zweite reflektierte Signal eine Reflektion des zweiten polarisierten Signals an dem Objekt ist. Ferner umfasst das Verfahren ein Klassifizieren 240 des Objektes basierend auf dem ersten polarisierten Signal, dem zweiten polarisierten Signal, dem ersten reflektierten Signals und dem zweiten reflektierten Signal sowie das Bestimmen einer Trajektorie des Objektes 250. Des Weiteren umfasst das Verfahren das Ausgeben eines Alarmsignals 260, wenn die Trajektorie eine definierte Bedingung erfüllt und wenn das Objekt zu einer definierten Klasse gehört.

Die von der Signalverarbeitungsschaltung 116 im Radar 100 durchgeführten Schritte zur Überwachung von Offshore Anlagen 102 mit einem Passiv Radar 100 sind die in den Fig. 2 gezeigten Schritte mit Ausnahme des Beleuchtens 210 selbst.

Fig. 3 zeigt eine schematische Darstellung einer konkreten Implementierung zur Auswertung von Radarsignalen anhand eines Blockdiagramms. Die Signalverarbeitungsblöcke sind hierarchisch in Ebenen angeordnet und jede Ebene ist mit einer Kennzeichnung versehen, auf die in der folgenden Beschreibung Bezug genommen wird.

Zur Auswertung werden die abgetasteten Signale der zweiten Antenne 106 (der "Überwachungsantenne") (das erste reflektierte Signal 112a und das zweite reflektierte Signal 112b) in der Signalverarbeitungsschaltung 116 bzw. in der Auswerteeinheit zunächst so aufbereitet (3b), dass sie als Empfangspulse $s_{HH}$ und $s_{VV}$ gleicher Länge vorliegen (3c). Eine parallele Signalprozessierung generiert zeitsynchron angepasste Filter-Koeffizienten $h_{HH}$ und $h_{VV}$ aus den Zeitsignalen der ersten Antenne 104 ("Referenzantenne"), also aus dem ersten polarisierten Signal 108a und dem zweiten polarisierte Signal 108b. Die polarisierten Signale sind in dem Beispiel als zueinander orthogonal linear polarisierte Signale angenommen. Dies erlaubt es, die Empfangssignale nachfolgend in einer copolaren und kreuzpolaren Korrelations-Verarbeitung (3d) zu filtern und die Mehrdeutigkeitsfunktionen für die vier polarimetrischen Kombinationen $\chi_{HH}, \chi_{VH}, \chi_{HV}, \chi_{VV}$ zu berechnen, welche als vier Radarbilder einer Detektionsstufe (3e) bereitgestellt werden. Das heißt, bei der Korrelations-Verarbeitung (3d) wird eine Korrelation des ersten polarisierten Signals mit dem ersten reflektierten Signal, des ersten polarisierten Signals mit dem zweiten reflektierten Signal, des zweiten polarisierten Signals mit dem ersten reflektierten Signal und des zweiten polarisierten Signals mit dem zweiten reflektierten Signal durchgeführt (3e). Durch Verfahren zur adaptiven Schwellwertbildung werden in den vier polarimetrischen Kombinationen $\chi_{HH}, \chi_{VH}, \chi_{HV}, \chi_{VV}$ anschließend mögliche Echoziele identifiziert. Einem Echo kann eine Signallaufzeit ($r_b$) und eine Doppler-Verschiebung ($f_D$) zugeordnet werden. Der Winkel ($\varphi, \phi$) aus denen diese empfangen wurden, wird durch die Strahlformung der Antenne vorgegeben. Die parallele Bereitstellung der vier orthogonalen $\chi_{i,j}$ erlaubt es zudem die bistatische Streumatrizen (Sinclair-Matrizen)

$$S_{echo} = \begin{bmatrix} S_{HH} & S_{HV} \\ S_{VH} & S_{VV} \end{bmatrix}$$ des Echos zu gewinnen. In der folgenden Verarbeitungsstufe (3f) werden auf diese Verfahren zur Einzel-Wertzerlegung angewandt, durch welche die am bistatischen Streuprozess beteiligten Koeffizienten berechnet werden können. Dadurch können beispielsweise Streuparameter wie $v, \gamma, \tau_E, \theta_E, \tau_R, \theta_R$ bestimmt werden, welche die folgenden Eigenschaften über das Zielechos wiedergeben.

Der Polarisierbarkeitswinkel $\gamma$ gibt an, ob der Streuer eher polarisierend (wenn $\gamma$ nahe 0 ist) oder nicht polarisierend (wenn $\gamma$ nahe bei $\pi/4$ liegt).

Der Skip-Winkel $v$ teilt die Streuer in zwei Klassen ein, je nach der Anzahl der Reflektionen, welche am Streuprozess beteiligt waren: ungerade (wenn $v = 0$) oder gerade (wenn $v = \pi/4$).

Die Symmetriewinkel $\tau_{E,R}$ ermöglicht es, zwischen symmetrischen (wenn $\tau_{E,R} = 0$) und unsymmetrischen (wenn $\tau_{E,R} = \pi/4$) Streuern zu unterscheiden. Bei bistatischer Streuung muss zwischen dem Fall der einfallenden Welle $\tau_R$ und emitierten Welle $\tau_E$ unterschieden werden. Dies ist deswegen der Fall, da bei der bistatischen Streuung, auf der die hierin beschriebenen Konzepte basieren, elektromagnetische Wellen von einem Objekt gestreut (reflektiert) werden, wenn das Sende- und Empfangsgerät an verschiedenen Orten positioniert sind.

Die Neigungswinkel $\theta_{E,R}$ beschreiben die Winkel zwischen der Projektion auf die Hauptachse des Streuers und der horizontalen Wellenebene.

Diese zusätzlichen Parameter lassen sich Objektspezifischen physikalischen Merkmalen zuordnen, wodurch die Grundlage zur Unterscheidung der Echos in verschiedene Objekt-Klassen gelegt wird. Basierend auf diesen Parametern kann das die Streuung verursachende Objekt also klassifiziert werden.

Parallel zur polarimetrischen Auswertung, verarbeitet eine Tracking-Stufe (3g) die für Radar üblichen Zustandsgrößen wie beispielsweise Geschwindigkeit $\vec{v}$ relative Höhe $h$ über Grund und radiale Entfernung r des Echos. Die Tracking Stufe bestimmt die Trajektorie eines Objektes. Diese Informationen können ergänzend ebenfalls einem Klassifikationsalgorithmus (3h) bereitgestellt werden, welcher das Signalecho einer Ziel-Kategorie zuordnet. Abhängig von der Überwachungsaufgabe des Passiv-Radars (z.B. BNK), entscheidet ein Algorithmus (3i) aufgrund der Objekt-Klasse sowie der rekonstruierten Trajektorie des Objektes, ob eine Alarm- Aktion wie beispielsweise die Schaltung der Hindernisfeuer erforderlich ist und erzeugt ein Steuersignal. Zu dessen Kommunikation mit beispielsweise einer übergeordneten Steuereinheit verfügt die Auswerteeinheit über eine Kommunikations-Schnittstelle. Im hier beschriebenen Konzept kontrolliert eine solche Einheit beispielsweise die Schaltung der Antikollisionsleuchten.

Mit anderen Worten beschreiben die vorhergehenden Absätze ein Verfahren zur passiven Überwachung eines Areals, das es ermöglicht, bewegte Objekte zu detektieren und nachzuverfolgen, ohne zusätzliche Signale aussenden zu müssen. Ein Vorteil besteht darin, dass dieses Verfahren überall da einsetzbar ist, wo terrestrische Beleuchter fehlen oder deren Signalleistung zu gering ist. Außerdem ist mit dem beschriebenen Verfahren die Detektion von nichtkooperativen Zielen möglich, welche beispielsweise keine Transponder tragen.

Ein weiterer Vorteil des Verfahrens besteht in der Verfügbarkeit von höheren Signalbandbreiten bei der Verwendung von Satellitenbeleuchtern. Hieraus ergibt sich eine höhere Auflösung bei der Zieldarstellung bzw. der Bewegungsschätzung, als dies bei herkömmlichen terrestrischen Passiv-Radaren möglich ist.

Wartungen an Rundfunk- und Kommunikationssatelliten können nahezu ausgeschlossen werden. Diese sind für eine hohe Zuverlässigkeit über mehrere Jahre ausgelegt. Als Beleuchter zeichnen sie sich somit durch eine sehr langzeitige Verfügbarkeit aus. Auf diese Weise kann z. B. eine bedarfsgesteuerte Nachtkennzeichnung (BNK) von Windenergieanlagen im Offshore Bereich realisiert werden.

Ein weiterer Anwendungsfall ist der Einsatz eines solchen Systems in explosionsgefährdeten Bereichen wie z. B. auf Ölbohrplattformen. Da ein Ausführungsbeispiel der hierin beschriebenen Passiv-Radare gegenüber einem konventionellen Radar keine intensive Hochfrequenzstrahlung emittiert, entfallen aufwändige und kostenpflichtige Wartungen.

Das beschriebene Verfahren eignet sich zur passiven Detektion von diversen Objekten auf dem Meer und auch auf dem Land. Damit kann eine rein passive Umgebungsüberwachung realisiert werden. Mögliche konkrete Anwendungsgebiete bestehen überall da, wo ein aktives Radar aus unterschiedlichen Gründen nicht eingesetzt werden kann. Eine konkrete Einsatzmöglichkeit ist die bedarfsgesteuerte Nachtkennzeichnung (BNK) von Windenergieanlagen im Offshore-Bereich. Diese kann auf Basis des beschriebenen Verfahrens Flugobjekte detektieren und die Antikollisionsleuchten bzw. Hindernisfeuer der WEA bei Annäherung eines Objektes an das definierte Areal aktivieren. Damit kann die nächtliche Beleuchtung der Anlagen im Offshore-Windpark (OWP) auf ein Minimum reduziert werden.

Die Einsatzumgebung in Offshore- Anwendungen wie beispielsweise in Windparks stellt besondere Herausforderung beim Betrieb von Radaren dar. Durch die hierin vorgeschlagenen polarimetrischen Signalverarbeitungsverfahren sind Ausführungsbeispiele von Radaren in der Lage, das Streuverhalten eines Objekts zu charakterisieren und daraus zusätzliche Informationen über die Struktur des Ziels zu gewinnen. Dies ermöglicht eine Ausleuchtung des Objekts mit polarisierter Radiofrequenzstrahlung. Beispielsweise mit Hilfe satellitengetragener Sender/Transmitter für Rundfunk- und Kommunikationssignale und entsprechender Signalverarbeitung kann eine bedarfsgerechte Befeuerung speziell im Offshore- Bereich, unabhängig von Kommunikationssendern an Land, rein passiv realisiert werden. Die von Satelliten ausgestrahlten Rundfunk-Sendesignale werden außerdem häufig dual-polarisiert ausgesandt, wodurch die Voraussetzung für eine passive polarimetrische Radarsignalverarbeitung gegeben ist.

Ein ähnliches Problem ergibt sich auf Ölplattformen, Ölbohrinseln oder ähnlichen Einrichtungen. Aktuell werden Anlagen dieser Art mit aktiven Radaren betrieben, deren Einsatz in einem explosionsgefährdeten Umfeld einen hohen Anspruch bezüglich des Explosionsschutzes darstellt. Dieser sieht für aktive Radare eine regelmäßige Wartung vor, die kostenintensiv ist. Ein passives Kollisionsradar auf beschriebener Basis mit einer ggf. bedarfsgerechten Befeuerung wäre gleichzeitig auch in der Lage ein aktives Radar zu ersetzen und somit beiden o. g. Aspekten zu genügen. Gleichzeitig kann ein solches Passiv-Radar auch als Küstenschutz oder Aufklärungsradar in diversen Einsatzszenarien verwendet werden. Ein weiterer vorteilhafter Einsatzbereich der hierin beschriebenen Vorrichtung sind daher Ölbohrinseln oder Ölbohrplattformen. Das beschriebene Verfahren eignet sich aufgrund seiner passiven Betriebsart als Alternative zu aktiven Radaren.

Denkbar ist auch der Einsatz der beschriebenen Vorrichtung in Häfen oder Küstenbereichen, wo keine hochfrequente Strahlung emittiert werden darf.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-) Programm mit einem Programmcode zum Ausführen eines oder mehrerer der obigen Verfahren sein oder sich darauf beziehen, wenn das Programm auf einem Computer, einem Prozessor oder einer sonstigen programmierbaren Hardwarekomponente ausgeführt wird. Schritte, Operationen oder Prozesse von verschiedenen der oben beschriebenen Verfahren können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausführbare, prozessorausführbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = application-specific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

**Patentansprüche**

1. Ein Verfahren zur Überwachung einer Offshore Anlage (102) mit einem Passiv Radar (100), umfassend:

   Beleuchten eines Gebietes um die Offshore Anlage (102) mit zumindest einem ersten polarisierten Signal (108a) und einem zweiten polarisierten Signal (108b) mittels eines Transmitters auf einer beweglichen Plattform (110);
   Empfangen des ersten polarisierten Signals (108a) und des zweiten polarisierten Signals (108b);
   Empfangen eines ersten reflektierten Signals (112a) und eines zweiten reflektierten Signals (112b), wobei das erste reflektierte Signal (112a) eine Reflektion des ersten polarisierten Signals (108a) an einem Objekt (114) und das zweite reflektierte Signal (112b) eine Reflektion des zweiten polarisierten Signals (108b) an dem Objekt (114) ist;
   Klassifizieren des Objektes (114 basierend auf dem ersten polarisierten Signal (108a), dem zweiten polarisierten Signal (108b), dem ersten reflektierten Signal (112a) und dem zweiten reflektierten Signal (112b);
   Bestimmen einer Trajektorie des Objektes (114); und
   Ausgeben eines Alarmsignals (120), wenn die Trajektorie eine definierte Bedingung erfüllt und wenn das Objekt (114) zu einer definierten Klasse gehört.

2. Das Verfahren gemäß Patentanspruch 1, wobei das Klassifizieren des Objektes (114) umfasst: Korrelieren des ersten polarisierten Signals (108a) und des ersten reflektierten Signals, Korrelieren des ersten polarisierten Signals (108a) und des zweiten reflektierten Signals (112b), Korrelieren des zweiten polarisierten Signals (108b) und des ersten reflektierten Signals, sowie Korrelieren des zweiten polarisierten Signals (108b) und des zweiten reflektierten Signals (112b).

3. Das Verfahren gemäß Patentanspruch 1 oder 2, wobei die bewegliche Plattform (110) ein Flugzeug, ein Ballon oder ein Satellit ist.

4. Das Verfahren gemäß einem der vorhergehenden Patentansprüche, ferner umfassend:
   Aktivieren einer Beleuchtung der Offshore Anlage (102) ansprechend auf das Alarmsignal (120).

5. Das Verfahren gemäß einem der vorhergehenden Ansprüche, wobei das Alarmsignal (120) ausgegeben wird, wenn das Objekt (114) als Fluggerät klassifiziert ist.

**6.** Das Verfahren gemäß einem der vorhergehenden Ansprüche, wobei das Alarmsignal (120) ausgegeben wird, wenn eine extrapolierte Trajektorie des Objektes (114) in einen vorbestimmten Bereich um die Offshore Anlage (102) eindringt.

**7.** Ein passives Radar (100) zur Überwachung von Offshore Anlagen (102), umfassend:

Eine erste Empfangsantenne, die ausgebildet ist, um ein erstes polarisiertes Signal und ein zweites polarisiertes Signal von einer beweglichen Plattform zu erhalten;

Eine zweite Empfangsantenne, die ausgebildet ist, um ein erstes reflektiertes Signal und ein zweites reflektiertes Signal zu empfangen, wobei das erste reflektierte Signal eine Reflektion des ersten polarisierten Signals an einem Objekt und das zweite reflektierte Signal eine Reflektion des zweiten polarisierten Signals an dem Objekt ist; und

Eine Signalverarbeitungsschaltung, die ausgebildet ist, zum

Klassifizieren des Objektes basierend auf dem ersten polarisierten Signal, dem zweiten polarisierten Signal, dem ersten reflektierten Signals und dem zweiten reflektierten Signal;

Bestimmen einer Trajektorie des Objektes; und

Ausgeben eines Alarmsignals, wenn die Trajektorie eine definierte Bedingung erfüllt und wenn das Objekt zu einer definierten Klasse gehört.

**8.** Radar nach Anspruch 7, wobei die Signalverarbeitungsschaltung ausgebildet ist, um die Klassifizierung des Objekts durch Korrelation des ersten polarisierten Signals mit dem ersten reflektierten Signal, des ersten polarisierten Signals mit dem zweiten reflektierten Signal, des zweiten polarisierten Signals mit dem ersten reflektierten Signal und des zweiten polarisierten Signals mit dem zweiten reflektierten Signal durchzuführen.

**9.** Radar nach einem der Ansprüche 7 oder 8, wobei die bewegliche Plattform ein Flugzeug, ein Ballon oder ein Satellit ist.

**10.** Radar nach einem der Ansprüche 7 bis 9, ferner umfassend eine Beleuchtungseinheit, die ansprechend auf das ausgegebene Alarmsignal aktiviert wird.

**11.** Radar nach einem der Ansprüche 7 bis 10, wobei die Signalverarbeitungseinheit ausgebildet ist, das Alarmsignal auszugeben, wenn das Objekt ein Fluggerät ist.

**12.** Radar nach einem der Ansprüche 7 bis 11, wobei die Signalverarbeitungseinheit ausgebildet ist, das Alarmsignal auszugeben, wenn eine extrapolierte Trajektorie des Objektes in einen vorbestimmten Bereich um die Offshore-Anlage eindringt.

**13.** Ein Verfahren zur Überwachung von Offshore Anlagen (102) mit einem Passiv Radar (100), umfasst:

Empfangen eines ersten polarisierten Signals und eines zweiten polarisierten Signals von einem Transmitter auf einer beweglichen Plattform;

Empfangen eines ersten reflektierten Signals und eines zweiten reflektierten Signals, wobei das erste reflektierte Signal eine Reflektion des ersten polarisierten Signals an einem Objekt und das zweite reflektierte Signal eine Reflektion des zweiten polarisierten Signals an dem Objekt ist;

Klassifizieren des Objektes basierend auf dem ersten polarisierten Signal, dem zweiten polarisierten Signal, dem ersten reflektierten Signals und dem zweiten reflektierten Signal;

Bestimmen einer Trajektorie des Objektes; und

Ausgeben eines Alarmsignals, wenn die Trajektorie eine definierte Bedingung erfüllt und wenn das Objekt zu einer definierten Klasse gehört.

**14.** Computerprogramm mit einem Programmcode, der eine Ausführung eines Verfahrens bewirkt, das folgendes umfasst:

Empfangen eines ersten polarisierten Signals und eines zweiten polarisierten Signals von einem Transmitter auf einer beweglichen Plattform;

Empfangen eines ersten reflektierten Signals und eines zweiten reflektierten Signals, wobei das erste reflektierte Signal eine Reflektion des ersten polarisierten Signals an einem Objekt und das zweite reflektierte Signal eine Reflektion des zweiten polarisierten Signals an dem Objekt ist;

Klassifizieren des Objektes basierend auf dem ersten polarisierten Signal, dem zweiten polarisierten Signal, dem ersten reflektierten Signals und dem zweiten reflektierten Signal; Bestimmen einer Trajektorie des Objektes; und

Ausgeben eines Alarmsignals, wenn die Trajektorie eine definierte Bedingung erfüllt und wenn das Objekt zu einer definierten Klasse gehört.

FIG. 1

EP 4 718 108 A1

# FIG. 2

| | |
|---|---|
| Beleuchten mit einem ersten polarisierten Signal und einem zweiten polarisierten Signal | ~210 |

| | |
|---|---|
| Empfangen des ersten polarisierten Signals und des zweiten polarisierten Signals | ~220 |

| | |
|---|---|
| Empfangen eines ersten reflektierten Signals und eines zweiten reflektierten Signals | ~230 |

| | |
|---|---|
| Klassifizieren eines Objektes | ~240 |

| | |
|---|---|
| Bestimmen einer Trajektorie des Objektes | ~250 |

| | |
|---|---|
| Ausgeben eines Alarmsignals | ~260 |

# FIG. 3

(3a) Überwachungsantenne → $E_{s,HH}$, $E_{s,VV}$     Referenzantenne → $E_{r,HH}$, $E_{r,VV}$

(3b) Abtastung/Signalaufbereitung → $X_{s,HH}$, $X_{s,HH}$     Abtastung/Signalaufbereitung → $X_{r,HH}$, $X_{r,VV}$

(3c) Empfangspulse → $S_{HH}$ | Empfangspulse → $S_{VV}$ | Filter → $h_{HH}$ | Filter → $h_{VV}$

(3d) Korrelation → $x_{HH}$ | Korrelation → $x_{VH}$ | Korrelation → $x_{HV}$ | Korrelation → $x_{VV}$

(3e) Detektion von Streuzielechos → $[S_{HH}, S_{VH}, S_{HV}, S_{VV}]_{echo}$    $[r_b, f_D, \varphi, \phi]_{echo}$

(3f) Bistatische polarim. Zerlegung → $[\nu, \gamma, \tau_\Sigma, \theta_\Sigma, \tau_R \theta_R]_{echo}$

(3g) Tracking-Stufe → $[\bar{\nu}, r, h]_{echo}$

(3h) Klassifikator (Vogel, Seegang, Regen, Flugzeug, Schiff, WEA etc.)

(3i) Algorithmik zu Entscheidungsfindung → Steuersignal

EP 4 718 108 A1

Europäisches
Patentamt

European
Patent Office

Office européen
des brevets

## EUROPÄISCHER RECHERCHENBERICHT

Nummer der Anmeldung

EP 25 20 3904

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | UMMENHOFER MARTIN ET AL: "First Results of DVB-S Based Passive Polarimetric Measurements of micro-Doppler Signatures of a Helicopter", 2023 IEEE INTERNATIONAL RADAR CONFERENCE (RADAR), IEEE, 6. November 2023 (2023-11-06), Seiten 1-6, XP034509716, DOI: 10.1109/RADAR54928.2023.10371029 [gefunden am 2023-12-29] | 1-3,7-9, 13,14 | INV. G01S7/02 G01S7/41 G01S13/00 G01S13/88 |
| Y | * Zusammenfassung * * Seite 1, rechte Spalte, Zeile 24 - Zeile 34 * * Seite 2, Zeile 9, letzter Absatz - Zeile 3, Absatz rhc * * Seite 4, Zeile 16, letzter Absatz - Zeile 48 * * Seite 4, rechte Spalte, Zeile 3 - Zeile 6 * * Seite 4, rechte Spalte, Zeile 29 - Zeile 39 * * Abbildungen 1-11 * ----- | 1-14 | |
| Y | KUSCHEL HEINER ET AL: "Passive radar collision warning system PARASOL", IEEE AEROSPACE AND ELECTRONIC SYSTEMS MAGAZINE, IEEE SERVICE CENTER, PISCATAWAY, NJ, US, Bd. 32, Nr. 2, 1. Februar 2017 (2017-02-01), Seiten 40-52, XP011647967, ISSN: 0885-8985, DOI: 10.1109/MAES.2017.150267 [gefunden am 2017-05-02] * Seite 1, linke Spalte, Zeile 1 - Zeile 25 * * Abbildungen 1-18 * ----- | 1-14 | |

RECHERCHIERTE
SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 4. Februar 2026 | Köppe, Maro |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes
Dokument

EPO FORM 1503 03.82 (P04C03)